# EUROPÄISCHE PATENTSCHRIFT

(11) **EP 3 766 646 B1**
(45) Veröffentlichungstag und Bekanntmachung des Hinweises auf die Patenterteilung: **26.10.2022**
(21) Anmeldenummer: 20185870.1
(22) Anmeldetag: 15.07.2020
(51) Int. Cl.: B25J 19/02, B25J 13/08, G01L 5/22, F16H 1/32, F16H 57/01

(54) **ZYKLOIDGETRIEBE MIT DREHMOMENTERFASSUNGSEINRICHTUNG**
CYCLOID GEAR WITH TORQUE DETECTING DEVICE
TRAIN D'ENGRENAGE DE TYPE ROUE CYCLOÏDALE POURVU DE DISPOSITIF DE DÉTECTION DE COUPLE

(30) Priorität: 19.07.2019 DE 102019119658
(43) Veröffentlichungstag der Anmeldung: 20.01.2021
(73) Patentinhaber: Pilz GmbH & Co. KG, 73760 Ostfildern (DE)
(72) Erfinder: Zhang, Peng, 73760 Ostfildern (DE); Schoch, Uwe, 73760 Ostfildern (DE)
(74) Vertreter: Witte, Weller & Partner Patentanwälte mbB

(56) Entgegenhaltungen:
- EP-A1- 2 851 675
- DE-A1-102018 205 154
- US-A1- 2010 005 907
- US-A1- 2019 009 417
- US-A1- 2019 140 526
- US-B1- 6 269 702

## Beschreibung

Die vorliegende Erfindung betrifft ein Zykloidgetriebe mit Drehmomenterfassungseinrichtung sowie einen Roboter mit einem entsprechenden Zykloidgetriebe und ein Verfahren zur Steuerung eines Roboters mit einem Zykloidgetriebe.

Die zunehmende Automatisierung von Werkzeugmaschinen und der vermehrte Einsatz von Robotern in der Industrie verlangt nach immer ausgefeilteren Sicherheitskonzepten. So müssen beispielsweise die Bewegungsabläufe von Robotern bzw. Maschinen in angemessener Weise koordiniert werden, um Objekte zielgerichtet zu kontaktieren oder zu fassen und um Menschen vor gefahrbringenden Bewegungen schützen zu können. Eine optimierte Regelung der Kontaktkraft kann überdies Verschleiß oder gar Beschädigungen an den Maschinen selbst verhindern.

Die Koordination der Bewegungen und die Regelung der ausgeübten Kräfte erfolgt sowohl bei Robotern als auch bei Werkzeugmaschinen üblicherweise durch eine programmierbare Steuerung. Um diese Aufgaben durchführen zu können, werden ausgeübte Kräfte entweder von Kraftaufnehmern gemessen oder über einen Motorstrom geschätzt.

In beiden Fällen sind die Ergebnisse der Messungen bzw. Schätzungen oft recht unpräzise. Insbesondere sind Messergebnisse oftmals durch den Einfluss äußerer Kräfte oder Reibungseffekte in den Maschinen selbst beeinflusst.

DE 10 2015 214 170 A1 offenbart einen Roboter, aufweisend eine Robotersteuerung, die ausgebildet und eingerichtet ist, ein Roboterprogramm auszuführen, und aufweisend einen Roboterarm mit wenigstens drei durch Glieder verbundene Gelenke, sowie aufweisend eine den wenigstens drei Gelenken entsprechende Anzahl von Antrieben, von denen jeder Antrieb zum Verstellen eines ihm zugeordneten Gelenks der wenigstens drei Gelenke ausgebildet und gemäß des Roboterprogramms automatisiert oder in einem Handfahrbetrieb durch die Robotersteuerung antreibbar ist, um das zugeordnete Gelenk automatisch zu verstellen, wobei wenigstens eines der Glieder eine Kraftmesseinrichtung aufweist, die ausgebildet ist, eine Kraft an dem Glied in einer vorgegebenen Richtung zu messen.

US 2019/0140526 A1 zeigt ein Lebensdauerschätzsystem, das eine Lebensdauer eines spezifischen Teils eines Untersetzungsgetriebes in einer relativ genauen Weise schätzen kann. Das Lebensdauerschätzsystem ist ein Lebensdauerschätzsystem, das eine Lebensdauer des Untersetzungsgetriebes, das einen Untersetzungsmechanismus enthält, schätzt. Das Lebensdauerschätzsystem enthält einen Sensor, der auf dem Untersetzungsgetriebe anzubringen ist und die Informationen zum Identifizieren einer in einem spezifischen Teil des Untersetzungsgetriebes erzeugten Beanspruchung detektiert, und eine Schätzeinheit, die die in dem spezifischen Teil erzeugte Beanspruchung basierend auf den durch den Sensor erhaltenen Detektionsinformationen identifiziert und die Lebensdauer des spezifischen Teils basierend auf der identifizierten Beanspruchung schätzt.

DE 10 2018 205 154 A1 zeigt einen Drehzahlreduzierer, der mit einem Puffermechanismus zum Reduzieren einer äußeren Kraft bereitgestellt wird und ein Belastungsdrehmoment während eines Betriebs zuverlässig messen kann. Eine Drehzahlreduzierungsvorrichtung weist einen Drehzahlreduzierungsmechanismus zum Reduzieren einer Rotationsgeschwindigkeit einer Ausgangsgröße mit Bezug auf eine Eingangsgröße zwischen einer Eingangsrotationswelle und einer Ausgangsrotationswelle, ein Gehäuse, das den Drehzahlreduzierungsmechanismus aufnimmt, und eine Puffereinheit auf, die aus einem elastischen Element ausgebildet ist und eine Dämpfungskraft hat, die hauptsächlich in einer im Wesentlichen rotierenden tangentialen Richtung wirkt. Eine durch die Puffereinheit erzeugte Verschiebungsgröße des Gehäuses wird durch eine Messvorrichtung gemessen.

EP 2 851 675 A1 zeigt eine Vorrichtung zur Meldung des Schadenszustands eines Reduzierers, mit einer Schadenszustands-Meldeeinrichtung zum Senden einer Meldung bezüglich eines Schadenszustands eines Reduzierers, einer Schwellenwert-Einstelleinrichtung zum Einstellen eines Schwellenwerts für die Meldung durch die Schadenszustands-Meldeeinrichtung und einer Lastempfangseinrichtung zum Empfangen einer Last, die an einen Reduzierer angelegt wird. Die Schadenszustands-Meldeeinrichtung sendet die Meldung bezüglich des Schadenszustands des Reduzierers entsprechend dem Schwellenwert, wenn eine Farbdifferenz zwischen einer durch ein Farblichtempfangselement erfassten Farbe und einer vorbestimmten Farbe den Schwellenwert erreicht. Die Schwellenwert-einstelleinrichtung stellt den Schwellenwert entsprechend der Last ein, die von der Lastempfangseinrichtung empfangen wird.

Es ist somit eine Aufgabe der vorliegenden Erfindung, ein Zykloidgetriebe mit Drehmomenterfassungseinrichtung anzugeben, welches das von dem Getriebe ausgeübte Drehmoment präziser erfassen kann und somit eine verbesserte Maschinensteuerung ermöglicht.

Gemäß einem ersten Aspekt der vorliegenden Erfindung wird diese Aufgabe gelöst durch ein Zykloidgetriebe für einen Antrieb gemäß Anspruch 1, bevorzugte Ausbildungen sind in den abhängigen Ansprüchen definiert.

Es ist somit eine Idee der vorliegenden Erfindung, das Drehmoment der Abtriebswelle nicht außerhalb, sondern noch innerhalb des Zykloidgetriebes zu messen, und zwar insbesondere zwischen den Lagern der Antriebswelle und der Abtriebswelle.

Zykloidgetriebe sind aus dem Stand der Technik bekannt. Zykloidgetriebe sind Exzentergetriebe. Dabei übertragen Kurvenscheiben ein Drehmoment wälzend. Zunächst treibt die Antriebswelle mit dem Exzenter (bzw. die Exzenterwelle) die Kurvenscheibe an. Bei dem Exzenter handelt es sich in der Regel um eine Exzenterscheibe am Ende der Antriebswelle zur Kurvenscheibe, wobei die Exzenterscheibe dazu ausgebildet ist, mittig in die Kurvenscheibe einzugreifen. Oft befindet sich zwischen dem Exzenter und der Kurvenscheibe auch ein Wälzlager. Ein derartiger Antrieb führt bei der Kurvenscheibe zu einer exzentrischen Bewegung und einer Rotation um die eigene Symmetrieachse.

Die Bezeichnung Kurvenscheibe rührt daher, dass die Kurvenscheibe an ihrem Rand kurvenförmige Einbuchtungen aufweist. Die Einbuchtungen bewirken, dass bei der Rotation der Scheibe deren Kontur eine Zykloide beschreibt. Insofern ist auch die Bezeichnung Zykloidenscheibe durchaus geläufig. Weiterhin kennt man die Kurvenscheibe bzw. Zykloidenscheibe auch unter dem Begriff Wälzscheibe. Dies rührt daher, dass die Scheibe aufgrund ihrer Einbuchtungen dazu ausgebildet ist, in dem Wälzring abzuwälzen bzw. auf diesem abzurollen. Insbesondere umfasst der Wälzring (oder auch Bolzenring) mehrere ringförmig angeordnete, (feststehende) Bolzen oder Rollen, auf denen die Kurvenscheibe abrollt.

Weiterhin umfasst die Kurvenscheibe mehrere Löcher, die in der Regel kranzförmig, d.h. als Lochkranz, angeordnet sind. Durch den exzentrischen Antrieb über die Antriebswelle bewegen sich die Löcher der Kurvenscheibe gegen den Drehsinn der Antriebswelle bzw. des Exzenters. Hinter der Kurvenscheibe befindet sich eine Bolzenscheibe mit mehreren Bolzen, wobei die Bolzen der Bolzenscheibe in die Löcher der Kurvenscheibe eingreifen. Damit treibt die Kurvenscheibe die Bolzenscheibe so an, dass sich auch die Bolzen der dahinter liegenden Bolzenscheibe ebenfalls gegen den Drehsinn der Antriebswelle bewegen. Vorzugsweise sind auch die Bolzen der Bolzenscheibe als Bolzenkranz angeordnet. Anstatt feststehender Bolzen werden oft auch Rollen verwendet, sodass die Bolzenscheibe auch die Bezeichnung Rollenscheibe trägt.

Mit der Bolzenscheibe fest verbunden ist die Abtriebswelle. Während die Antriebswelle in dem ersten Lager (fest) gelagert ist, ist die Abtriebswelle in dem zweiten Lager (fest) gelagert. Vorzugsweise ist die Abtriebswelle koaxial zur Antriebswelle angebracht.

In der Regel umfasst der Wälzring einen Bolzen mehr als die Kurvenscheibe Einbuchtungen hat. Dies ermöglicht, dass sich der Abtrieb bzw. die Rollenscheibe und die Abtriebswelle je Antriebsumdrehung um eine Einbuchtung (der Kurvenscheibe) weiter dreht und dadurch dessen Drehzahl reduziert wird. Andere Verhältnisse der Anzahl von Löchern zu Bolzen Wälzrings sind ebenso denkbar. Weiterhin ist denkbar, dass das Zykloidgetriebe nicht nur über einen Exzenter und eine Kurvenscheibe, sondern über mehrere Exzenter und mehrere Kurvenscheiben verfügt. Dies ist insbesondere zur Vermeidung von Unwuchteffekten vorteilhaft.

Zwischen dem ersten und dem zweiten Lager befindet sich erfindungsgemäß die Drehmomenterfassungseinrichtung, welche dazu ausgebildet ist, das Drehmoment der Abtriebswelle zu erfassen. Die Erfassung des Drehmoments erfolgt vorzugsweise kontinuierlich, kann aber grundsätzlich auch in diskreten Zeitschritten erfolgen. Die Positionierung der Drehmomenterfassungseinrichtung zwischen dem ersten und dem zweiten Lager, also innerhalb des Getriebes, hat den Vorteil, dass Fehlerquellen von außerhalb des Getriebes die Messung des Drehmoments der Abtriebswelle nicht verfälschen können. Tatsächlich befindet sich die Drehmomenterfassungseinrichtung zwischen dem ersten Lager und dem zweiten Lager des Getriebes nämlich in einer geschützten Position. Überdies wird so das Drehmoment an der Getriebeseite der Abtriebswelle gemessen, so dass Toleranzen in der Drehmomentmessung aufgrund der Länge der Abtriebswelle verringert werden. Mit anderen Worten wird durch die Integration der Drehmomenterfassungseinrichtung im Getriebe deren Lagerung zur Entkopplung von Kräften und Momenten, welche nicht gemessen werden sollen, genutzt. Außerdem können Bauraum und Zusatzkosten für eine separate Drehmomenterfassung außerhalb des Getriebes eingespart werden.

In einer bevorzugten Ausgestaltung des Zykloidgetriebes sind das erste Lager, das zweite Lager und der Wälzring fest in dem Gehäuse angeordnet. Dies ermöglicht ein feste Lagerung der An- und Abtriebswellen sowie eine feste Position der weiteren Getriebeteile wie Kurvenscheibe, Bolzenscheibe und Drehmomenterfassungseinrichtung. Damit kann insbesondere eine hohe Messgenauigkeit des Drehmoments gewährleistet werden.

In einer ersten Variante der Erfindung nach Anspruch 1 befindet sich die Drehmomenterfassungseinrichtung zwischen der Bolzenscheibe und dem zweiten Lager. Somit ist die Drehmomenterfassungseinrichtung abtriebsseitig angeordnet. Eine Verfälschung der Messergebnisse durch Reibungskräfte innerhalb des Getriebes kann damit ausgeschlossen oder zumindest reduziert werden.

In einer zweiten Variante der Erfindung nach Anspruch 1, ist die Drehmomenterfassungseinrichtung in die Bolzenscheibe integriert. Da die Bolzenscheibe fest mit der Abtriebswelle verbunden ist, hat dies zur Folge, dass auch die Drehmomenterfassungseinrichtung gegenüber der Abtriebswelle fest positioniert ist. Dies gewährleistet eine präzise Messung des Drehmoments der Abtriebswelle. Darüber hinaus hat diese Ausgestaltung den Vorteil, dass die Toleranzkette des Getriebes gleichbleibt.

In einer weiteren Ausgestaltung ist die Drehmomenterfassungseinrichtung dazu ausgebildet ist, das Drehmoment der Abtriebswelle in Drehrichtung um die Längsachse der Abtriebswelle zu erfassen.

In einer bevorzugten Ausgestaltung, ist die Drehmomenterfassungseinrichtung des Zykloidgetriebes fest mit der Bolzenscheibe und/oder der Abtriebswelle verbunden. Dies bedeutet nicht notwendigerweise, dass die Drehmomenterfassungseinrichtung direkt mit der Abtriebswelle bzw. der Bolzenscheibe verbunden sein muss. Tatsächlich sind zwischen Abtriebswelle und Drehmomenterfassungseinrichtung (bzw. Bolzenscheibe und Drehmomenterfassungseinrichtung) weitere, fest verbundene Bauteile denkbar. Damit ist nicht nur die Abtriebswelle selbst, sondern auch die Drehmomenterfassungseinrichtung fest gelagert. Dies ermöglicht eine präzise Drehmomenterfassung.

In einer weiteren Ausgestaltung, umfasst die Drehmomenterfassungseinrichtung einen oder mehrere Dehnungsmessstreifen. Die Drehmomenterfassungseinrichtung kann lediglich einen oder alternativ mehrere Dehnungsmessstreifen umfassen, die auf die Abtriebswelle und/oder die Bolzenscheibe aufgebracht oder ein weiteres Bauteil umfassen, auf welchem der oder die Dehnungsmessstreifen angeordnet sind. Durch die Wirkung eines Drehmoments auf die Drehmomenterfassungseinrichtung erfährt die Einrichtung Formänderungen, insbesondere Dehnungen und Stauchungen an ihrer Oberfläche, die von den Dehnungsmessstreifen, auch DMS genannt, erfasst werden können. Vorzugsweise sind die DMS auf die Drehmomenterfassungseinrichtung bzw. die Abtriebswelle oder die Bolzenscheibe geklebt, um somit gemeinsam mit dem beklebten Objekt verformbar zu sein. Bei Einsatz mehrerer DMS können diese als Brückenschaltungen verschaltet werden, bevorzugt als Wheatstone-Brückenschaltung. Durch eine entsprechende Verschaltung und Anordnung der DMS kann beispielsweise eine Temperaturkompensation erreicht werden, d.h. Temperaturdehnungen heben sich auf. Weiterhin können auch bestimmte Dehnungsanteile kompensiert bzw. selektiert werden.

In einer weiteren Ausgestaltung, umfasst die Drehmomenterfassungseinrichtung einen Messflansch. Vorzugsweise wird der Messflansch direkt mit der Abtriebswelle und/oder der Bolzenscheibe verbunden.

In einer weiteren Ausgestaltung, umfasst der Messflansch zwei konzentrische Ringe, wobei der innere Ring mit der Abtriebswelle und der äußere Ring mit der Bolzenscheibe verbunden ist oder der innere Ring mit der Bolzenscheibe und der äußere Ring mit der Abtriebswelle verbunden ist. Grundsätzlich sind auch weitere Ringe denkbar.

In einer anderen Ausgestaltung, sind der innere Ring und der äußere Ring über Speichen verbunden, wobei auf den Speichen Dehnungsmessstreifen angebracht sind. Beispielsweise könnten jeweils zwei Dehnungsmessstreifen an zwei gegenüberliegenden Seiten der Speichen angeordnet sein. Es ist denkbar, dass jede Speiche mindestens einen Dehnungsmessstreifen trägt. Ebenso denkbar ist, dass nicht alle Speichen einen Dehnungsmessstreifen tragen. Beispielsweise könnte nur die Hälfte der Speichen einen DMS tragen.

In einer weiteren Ausgestaltung des Zykloidgetriebes, ist die Drehmomenterfassungseinrichtung dazu ausgebildet, eine Übertragung des erfassten Drehmoments an eine Steuereinheit des Antriebs durchzuführen. Damit wird ermöglicht, dass der Antrieb bzw. der Motor einer Werkzeugmaschine oder eines Roboters das Zykloidgetriebe dem gemessenen Drehmoment entsprechend antreibt. Die Steuereinheit für den Antrieb kann beispielsweise wie der Antrieb selbst in der Gelenkeinheit eines Roboters angeordnet sein. Andere Positionierungen sind ebenso denkbar.

In einer anderen Ausgestaltung, umfasst das Zykloidgetriebe einen Übertrager, wobei die Übertragung des erfassten Drehmoments an die Steuereinheit über den Übertrager erfolgt. Vorzugsweise dient der Übertrager auch als Stromlieferant für die Drehmomenterfassungseinrichtung kann aber auch durch eine Batterie erfolgen, die beispielsweise ebenfalls auf der Abtriebswelle befestigt ist und mit rotiert.

In einer bevorzugten Ausgestaltung, ist der Übertrager eines von Schleifringübertrager, induktiver Übertrager, kapazitiver Übertrager, Funkübertrager oder optischer Übertrager.

Schleifringübertrager umfassen einen Schleifring und einen Stator. Der Schleifring wird vorzugsweise auf der Abtriebswelle (fest) angebracht und ist dazu ausgebildet mit der Abtriebswelle zu rotieren. Der Stator umfasst in der Regel Kohlebürsten, die dazu ausgebildet sind in (ständigem) Kontakt mit den rotierenden Schleifringen zu stehen. Während der Schleifring mit der Drehmomenterfassungseinrichtung, beispielsweise mit einem Dehnungsmessstreifen, verbunden ist, ist der Stator mit einer Steuer bzw. Auswerteeinheit verbunden. So ist eine Übertragung der gemessenen Drehmomentwerte der Abtriebswelle an die Steuereinheit zur Auswertung der Messsignale möglich. Gleichzeitig ist denkbar, dass über den Schleifringübertrager eine Übertragung einer Speisespannung für die Drehmomenterfassungseinrichtung erfolgt.

Im Gegensatz zu der Datenübertragung mittels Berührung wie bei Schleifübertragern, ist aber auch eine berührungslose Übertragung der erfassten Messwerte möglich, und zwar durch induktiver Übertrager, kapazitiver Übertrager, Funkübertrager oder optischer Übertrager. Insbesondere bei induktive und kapazitiven Übertragern ist es weiterhin möglich, dass durch sie auch eine Stromversorgung der Drehmomenterfassungseinrichtung erfolgen kann.

Ein Funkübertrager, beispielsweise, umfasst einen Sender und einen Empfänger. Der Sender kann in die Drehmomenterfassungseinrichtung integriert sein, aber auch anderweitig mit dieser in Verbindung stehen, damit die Messdaten der Drehmomenterfassungseinrichtung dem Sender bereit stehen. Die Messdaten werden über den Sender als elektromagnetisches Signal an den Empfänger geleitet. Der Empfänger stellt das empfangene Signal dann der Steuereinheit des Antriebes zur Verfügung.

In einer bevorzugten Ausgestaltung ist die Antriebswelle, die Abtriebswelle und/oder die Drehmomenterfassungseinrichtung des Zykloidgetriebes als Hohlwelle ausgebildet. Dies ermöglicht das Führen von Daten- oder Stromträgern in den jeweiligen Wellen und/oder der Drehmomenterfassungseinrichtung. Weiterhin können bei einer als Hohlwelle ausgebildeten Drehmomenterfassungseinrichtung Dehnungsmessstreifen direkt auf die Oberfläche der Hohlwelle angebracht werden, und zwar ohne Einbußen in der Messgenauigkeit hinnehmen zu müssen.

Gemäß einem zweiten Aspekt der vorliegenden Erfindung wird die oben gennannte Aufgabe gelöst durch einen Roboter gemäß Anspruch 11.

In einer Ausgestaltung des Roboters, umfasst der Roboter eine Steuereinheit, wobei die Drehmomenterfassungseinrichtung des Zykloidgetriebes dazu ausgebildet ist, das erfasste Drehmoment an die Steuereinheit zu übertragen und wobei die Steuereinheit dazu ausgebildet ist, den Roboter in Abhängigkeit von dem Drehmoment zu steuern.

Vorzugsweise ist die Steuereinheit dazu ausgebildet, den Roboter sicher zu steuern. Dies bedeutet, dass der Roboter über fehlersichere Komponenten für den Maschinen- und Anlagenbau verfügt, welche typischerweise die "Sicherheitsanforderungsstufe" SIL 3 nach EN/IEC 61508 und/oder den "Performance Level" PL e nach EN/ISO 13849 erfüllen. Weiterhin handelt es sich bei der Steuereinheit vorzugsweise um eine Sicherheitssteuerung. Diese unterscheidet sich von einer "normalen" Betriebssteuerung dadurch, dass sie durch Maßnahmen wie redundante Signalverarbeitungskanäle, regelmäßige Selbsttests und dergleichen eigenfehlersicher aufgebaut ist.

Im Betrieb des Roboters kann auf das abtriebsseitige Roboterglied ein Drehmoment wirken. Dieses Drehmoment wird über die Drehmomenterfassungseinrichtung gemessen. Denn wenn ein Drehmoment auf das abtriebsseitige Roboterglied wirkt, Wirkt nämlich auf wirkt dieses auch auf das Zykloidgetriebe, da die Abtriebswelle einerseits mit dem abtriebsseitigen Roboterglied fest verbunden ist und andererseits fest in dem Getriebe gelagert ist.

Gemäß einem dritten Aspekt der vorliegenden Erfindung wird die genannte Aufgabe gelöst durch ein Verfahren zur Steuerung eines Roboters mit einem Zykloidgetriebe gemäß zumindest einer hierin beschriebenen Ausführungsform mit den Schritten:
- Erfassen eines Drehmoments mit der Drehmomenterfassungseinrichtung des Zykloidgetriebes,
- Übertragen des erfassten Drehmoments an eine Steuereinheit des Roboters, und
- Steuern des Roboters in Abhängigkeit von dem Drehmoment.

Vorzugsweise handelt es sich bei dem Verfahren um ein sicheres Verfahren, d.h. um ein Verfahren bei dem die "Sicherheitsanforderungsstufe" SIL 3 nach EN/IEC 61508 und/oder der "Performance Level" PL e nach EN/ISO 13849 erfüllt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel des Zykloidgetriebes in einer Querschnittdarstellung,
- Fig. 2: das erste Ausführungsbeispiel des Zykloidgetriebes für einen Antrieb in einer Explosionsdarstellung,
- Fig. 3: ein zweites Ausführungsbeispiel des Zykloidgetriebes in einer Querschnittsdarstellung,
- Fig. 4: ein Ausführungsbeispiel einer Drehmomenterfassungseinrichtung für ein Zykloidgetriebe in einer perspektivischen Ansicht,
- Fig. 5: ein drittes Ausführungsbeispiel des Zykloidgetriebes in einer Explosionsdarstellung, und
- Fig. 6: ein Ausführungsbeispiel eines Roboters umfassend ein Zykloidgetriebe gemäß zumindest einer hierin beschriebenen Ausführungsform in perspektivischer Darstellung.

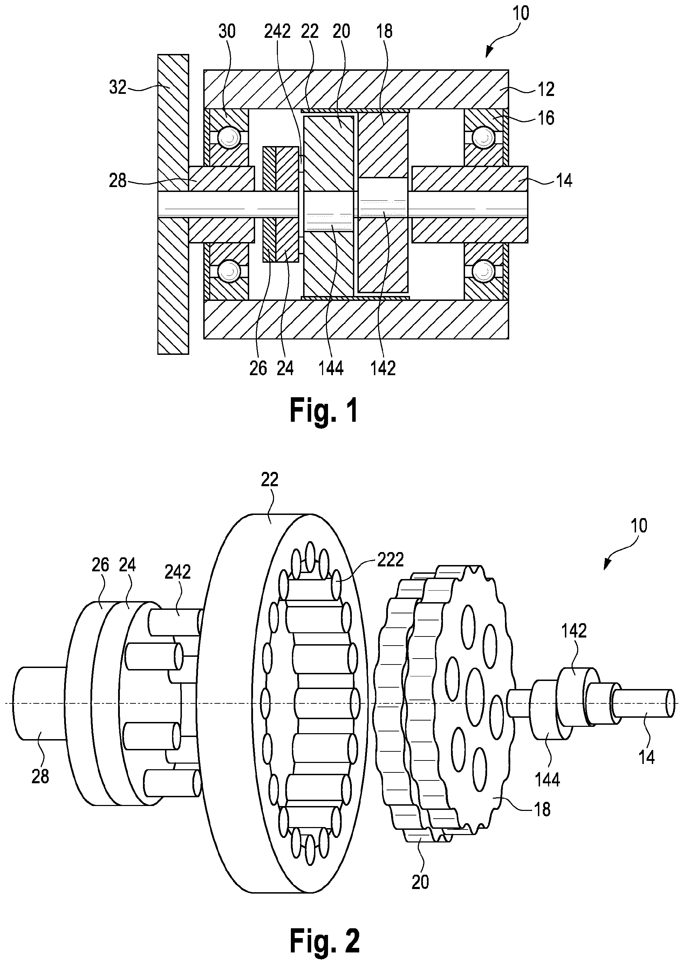

Fig. 1 zeigt ein erstes Ausführungsbeispiel des Zykloidgetriebes für einen Antrieb in einer Querschnittdarstellung. Das Zykloidgetriebe ist hier in seiner Gesamtheit mit der Bezugsziffer 10 bezeichnet. Das Zykloidgetriebe 10 umfasst ein Gehäuse 12, eine Antriebswelle 14 mit einem ersten Exzenter 142 und einem zweiten Exzenter 144, ein erstes Lager 16 für die Antriebswelle 14, eine erste Kurvenscheibe 18, eine zweite Kurvenscheibe 20, einen Wälrzing 22, eine Bolzenscheibe 24, eine Drehmomenterfassungseinrichtung 26, eine Abtriebswelle 28, ein zweites Lager 30 für die Abtriebswelle 28 und einen Außenflansch 32.

In diesem Ausführungsbeispiel umschließt das Gehäuse sämtliche Teile des Getriebes 10. Lediglich die Antriebswelle 14 und die Abtriebswelle 28 mit dem Außenflansch 32 ragen aus dem Gehäuse 12 heraus. Das Gehäuse 12 kann beispielsweise aus Metall oder Kunststoff sein und hat vornehmlich die Aufgabe, die innenliegenden Getriebeteile vor äußeren Einflüssen wie etwa Staub zu schützen. Das antriebsseitige erste Lager 16 dient der Lagerung der Antriebswelle 14, während das abtriebsseitige zweite Lager 30 zur Lagerung der Abtriebswelle 28 ausgebildet ist. Vorzugsweise sind die beiden Lager 16 und 30 fest mit dem Gehäuse 12 verbunden. Die Lager 16 und 30 können beispielsweise als Wälzlager ausgebildet sein. Die Antriebswelle 14 umfasst in diesem Ausführungsbeispiel zwei Exzenter, wobei der erste Exzenter 142 zum Antrieb der ersten Kurvenscheibe 18 und der zweite Exzenter 144 zum Antrieb der zweiten Kurvenscheibe 20 ausgebildet ist. Tatsächlich sind die Kurvenscheiben 18 und 20 jeweils drehbar auf einem der Exzenter angeordnet. Dementsprechend werden die Kurvenscheiben 18 und 20 exzentrisch angetrieben. In diesem Ausführungsbeispiel sind die Kurvenscheiben um 180° versetzt angeordnet, um eine möglichst symmetrische Lastverteilung zu gewährleisten und Unwuchten zu minimieren bzw. zu verhindern.

Die Kurvenscheiben 18 und 20 umfassen jeweils am Scheibenrand mehrere Ausnehmungen, über welche sie an dem Wälzring 22, bzw. dessen Bolzen, abrollen können. Der Wälzring 22 ist vorzugsweise fest im Gehäuse 12 verbaut, muss aber nicht notwendigerweise direkt mit diesem verbunden sein. Der Wälzring 22 kann aus einem Ring mit feststehenden Bolzen oder Rollen 222 gebildet sein. Der Wälzring 22 kann aber auch dadurch ausgebildet werden, dass Bolzen 222 direkt auf der Gehäusewand angeordnet sind.

Hinter der zweiten Kurvenscheibe 20 ist in diesem Ausführungsbeispiel die Bolzenscheibe 24 angeordnet. Die Bolzenscheibe 24 umfasst mehrere Bolzen 242. Vorzugsweise ist die Anzahl der Bolzen 242 genauso hoch wie die Anzahl der Löcher in den Kurvenscheiben 18 und 20. Die Bolzen 242 sind dazu ausgestaltet, in die Löcher der ersten und zweiten Kurvenscheibe 18, 20 einzugreifen und in Folge der Drehbewegung der Kurvenscheiben in deren Löchern abzurollen, sodass die Bolzenscheibe 24 durch die Kurvenscheiben 18, 20 angetrieben wird.

Hinter der Bolzenscheibe 24 ist in diesem Ausführungsbeispiel die Drehmomenterfassungseinrichtung 26 angeordnet. Bei der Drehmomenterfassungseinrichtung 26 handelt es sich um einen Messflansch, der zum einen an der Rückseite der Bolzenscheibe 24 angeflanscht ist und zum anderen mit der Abtriebswelle 28 verbunden ist. Insbesondere ist die Drehmomenterfassungseinrichtung vor dem zweiten Lager 30 angebracht. Die Drehmomenterfassungseinrichtung 26 ist dazu ausgebildet, das Drehmoment der Abtriebswelle 28 zu erfassen.

Außerhalb des Gehäuses 12 ist an der Abtriebswelle 28 der Außenflansch 32 angebracht. An den Außenflansch können je nach Bedarf Bauteile, wie beispielsweise ein Roboterarm, angeflanscht werden.

Fig. 2 zeigt das erste Ausführungsbeispiel des Zykloidgetriebes 10 für einen Antrieb in einer Explosionsdarstellung. Nicht abgebildet sind das Gehäuse 12 sowie das erste Lager 16 und das zweite Lager 30. Ferner fehlt der Außenflansch 32 in dieser Darstellung. In dieser Darstellung sind insbesondere der erste Exzenter 142, der zweite Exzenter 144, die Rollen 222 des Wälzlagers und die Bolzen 242 der Bolzenscheibe 24 gut zu erkennen. Weiterhin erkennbar ist, dass die Antriebwelle 14 (auch Eingangswelle genannt) zwei Exzenter 142 und 144 aufweist, die als zur Längsachse der Antriebswelle 14 exzentrisch gelagerte Kreisscheiben ausgebildet sind. Insbesondere sind die Exzenter um 180° verdreht. Damit können etwaige Unwuchten besonders effektiv verhindert werden.

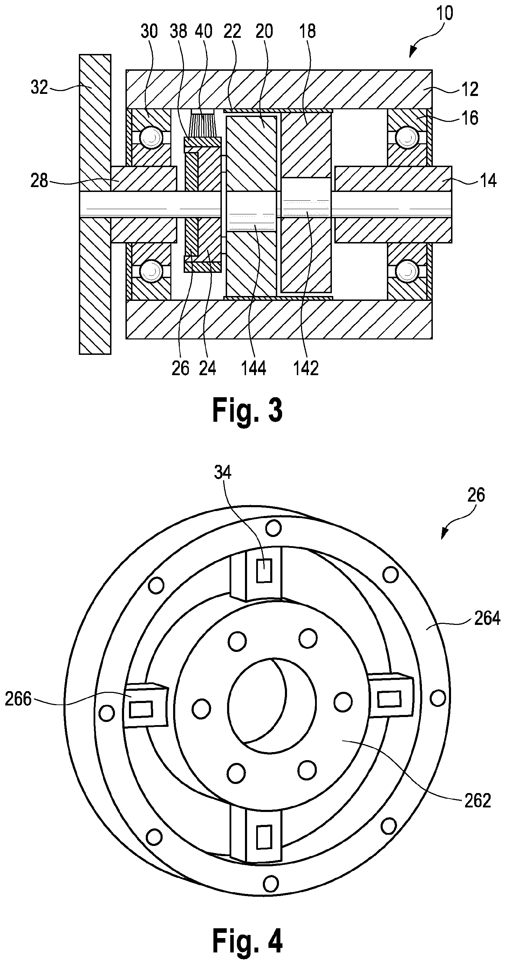

Fig. 3 zeigt ein zweites Ausführungsbeispiel des Zykloidgetriebes 10 in einer Querschnittsdarstellung. Wie das Zykloidgetriebe des ersten Ausführungsbeispiels umfasst auch das Zykloidgetriebe des zweiten Ausführungsbeispiels zwei Kurvenscheiben (d.h. Zykloidenscheiben). In diesem Ausführungsbeispiel ist die Drehmomenterfassungseinrichtung 26 in die Bolzenscheibe 24 integriert. Mit anderen Worten, ist die Drehmomenterfassungseinrichtung 26 in der Bolzenscheibe 24, d.h. im Umsetzer, als eine Einheit eingebaut.

Ferner umfasst das Zykloidgetriebe 10 in diesem Ausführungsbeispiel einen Schleifringübertrager, welcher einen Schleifring 38 und einen Stator 40 umfasst. Der Schleifring 38 ist fest auf der Bolzenscheibe 24 angeordnet und dazu ausgebildet mit der Drehmomenterfassungseinrichtung 26 in Verbindung zu stehen. Der Stator 40 umfasst eine Bürste, die dazu ausgebildet ist mit dem Schleifring 38 in Kontakt zu stehen. Während der Schleifring 36 mit der Bolzenscheibe 24 bzw. der Abtriebswelle 28 rotiert, ist der Stator 40 gegenüber dem Gehäuse 12 fest und unbeweglich angeordnet. Der Schleifringübertrager ermöglicht die Übertragung des von dem Dehnungsmessstreifen (DMS) 34 gemessenen Drehmoments an eine Steuereinheit des Antriebs des Getriebes 10.

Fig. 4 zeigt ein Ausführungsbeispiel einer Drehmomenterfassungseinrichtung für ein Zykloidgetriebe in einer perspektivischen Ansicht. Die Drehmomenterfassungseinrichtung 26 bzw. der Drehmomentsensor ist in diesem Ausführungsbeispiel als Messflansch ausgestaltet. Die Drehmomenterfassungseinrichtung 26 umfasst zwei konzentrische Ringe 262 und 264, die durch Streben bzw. Speichen 266 miteinander verbunden sind. Beide Ringe umfassen mehrere Bohrungen zur Befestigung an abtriebsseitigen Bauteilen eines Zykloidgetriebes 10. Beispielsweise könnte der innere Ring 262 an der Abtriebswelle 28 und der äußere Ring 264 an der Bolzenscheibe 24 befestigt werden. Andere Befestigungsmöglichkeiten sind ebenso denkbar. In diesem Ausführungsbeispiel ist auf jeder der mit 90° beabstandeten Speichen 266 ein DMS 34 zur Messung des Drehmoments der Drehmomenterfassungseinrichtung 26 (und damit der Abtriebswelle) vorgesehen. Grundsätzlich ist auch denkbar, dass nicht alle Speichen DMS tragen. Tatsächlich könnte ein DMS auch an einer anderen Stelle des Flansches angeordnet sein. Vorzugsweise sind die DMS mit dem Flansch verklebt. Im Betrieb verformen sich die Messspeichen 266 elastisch und in Abhängigkeit von der einwirkenden Belastung unterschiedlich stark. Die auf den Messspeichen 266 angeordneten DMS 34 verformen sich analog zu den Messspeichen 266. Die DMS 34 zeigen diese Verformung als Änderung ihres elektrischen Widerstands an. Diese Änderung wiederum kann mit einem Drehmoment in Verbindung gebracht werden, so dass die DMS 34 als Drehmomentsensoren fungieren.

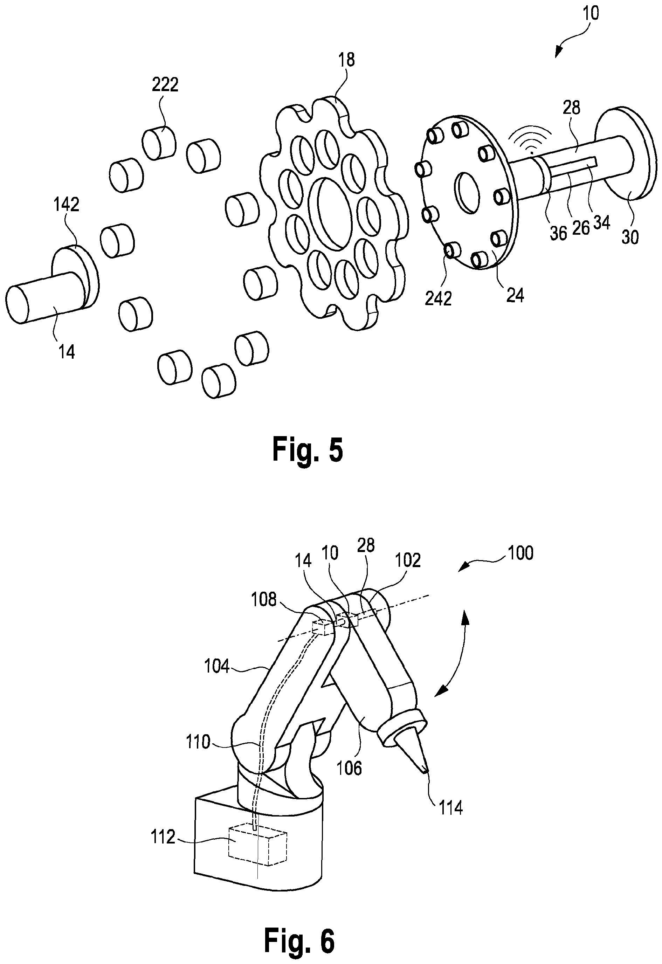

Fig. 5 zeigt ein drittes Ausführungsbeispiel eines Zykloidgetriebes in einer Explosionsdarstellung. In diesem Ausführungsbeispiel ist die Abtriebswelle 28 als Hohlwelle ausgestaltet. Die Drehmomenterfassungseinrichtung 26 umfasst in dieser Ausgestaltung einen DMS 34, der zwischen der Bolzenscheibe 24 und dem zweiten Lager 30 (direkt) auf der Abtriebswelle 28 angebracht ist. Die Abtriebswelle ist dabei drehbar in dem zweiten Lager 30 gelagert und verformt sich durch die Drehung in diesem Lager. Damit verformt sich auch der aufgebrachte DMS 34, wodurch die Drehmomenterfassungseinrichtung 26 das auf die Abtriebswelle 28 wirkende Drehmoment ermitteln kann. In anderen Ausgestaltungen ist der Einsatz mehrerer DMS 34 denkbar, beispielsweise als Dehnungsmessrosette.

Ferner gezeigt ist ein Übertrager 36, der sich in diesem Ausführungsbeispiel auf der Abtriebswelle 28 befindet und in Kontakt mit dem DMS 34 steht. Der Übertrager 36 ist dazu ausgebildet das von dem DMS 34 erfasste Drehmoment der Abtriebswelle 28 an eine Steuereinheit zur Auswertung zu übertragen. Die Übertragung erfolgt in diesem Ausführungsbeispiel drahtlos, insbesondere per Funk.

Fig. 6 zeigt ein Ausführungsbeispiel eines Roboters umfassend ein Zykloidgetriebe gemäß zumindest einer hierin beschriebenen Ausführungsform in perspektivischer Darstellung. Der dargestellte Roboter 100 umfasst eine Gelenkeinheit 102, welche ein antriebsseitiges Roboterglied 104 mit einem abtriebsseitigen Roboterglied 106 verbindet. In diesem Ausführungsbeispiel ist zumindest das abtriebsseitige Roboterglied 106 beweglich mit der Gelenkeinheit 102 bzw. dem Gelenk verbunden. Innerhalb der Gelenkeinheit 102 befindet sich ein Zykloidgetriebe 10, aus welchem die Antriebswelle 14 und die Abtriebswelle 28 herausragt. Ferner befindet sich in der Gelenkeinheit 102 ein Antrieb 108, der dazu ausgebildet ist, die Antriebswelle 14 anzutreiben. Der Antrieb 108 kann beispielsweise über ein Stromkabel 110 mit Strom versorgt werden. Die Antriebswelle 14 ist über das Getriebe 10 mit der Abtriebswelle 28 gekoppelt. Die Abtriebswelle 28 wiederum ist fest mit dem abtriebsseitigen Roboterarm 106 verbunden. Damit treibt der Antrieb 108 in der Gelenkeinheit 102 über das Zykloidgetriebe 10 das abtriebsseitige Roboterglied 106 an. Da die Abtriebswelle 28 dazu ausgebildet ist, drehbar um ihre Längsachse angetrieben zu werden, ist das abtriebsseitige Roboterglied 106 ebenfalls drehbar um diese Längsachse beweglich. Durch die Drehbewegung des Roboterarms 106 kann ein an dem Roboterarm befindliches Werkzeug 114 präzise an ein Werkstück herangeführt werden.

In dem in der Gelenkeinheit 102 verbauten Zykloidgetriebe 10 befindet sich insbesondere eine Drehmomenterfassungseinrichtung 26 (nicht abgebildet), die dazu ausgebildet ist, das Drehmoment der Abtriebswelle 28 bzw. des mit der Abtriebswelle 28 fest verbundenen abtriebsseitigen Robotergliedes 106 zu messen. Nach erfolgter Messung des anliegenden Drehmoments werden die Messwerte von der Drehmomenterfassungseinrichtung 26 des Zykloidgetriebes 10 der Steuereinheit 112 des Roboters 100 bereitgestellt. In Abhängigkeit von den Messwerten steuert die Steuereinheit 112 dann das abtriebsseitige Roboterglied 106 des Roboters 100.

Um Beschädigungen an dem Werkstück, dem Roboter 100 selbst oder gar Menschen in der Umgebung des Roboters 100 zu vermeiden, wird das Drehmoment des Roboterarms 106 vorzugsweise permanent über die Drehmomenterfassungseinrichtung 26 überwacht. Insbesondere werden die von der Drehmomenterfassungseinrichtung 26 gemessenen Drehmomente an die Steuereinheit 112 weitergegeben. Werden beispielsweise vorbestimmte Grenzwerte überschritten, veranlasst die Steuereinheit 112 eine Anpassung des Drehmoments der Antriebswelle 14 über den Antrieb 108 oder einen Antriebsstop.

Es ist zum Beispiel denkbar, dass das Drehmoment des Roboterarms 106 bzw. der Abtriebswelle 28 durch unvorhergesehene Widerstände wie beispielsweise eine Berührung mit einem Menschen nicht dem Drehmoment entspricht, das eigentlich durch den Antrieb 108 entstehen sollte. Auch Reibungseffekte innerhalb des Zykloidgetriebes 10 können zu unvorhergesehenen Änderungen des Drehmoments der Abtriebswelle 28 führen. Durch die feste Lagerung der Drehmomenterfassungseinrichtung 26 in dem Zykloidgetriebe 10 können Veränderungen des Drehmoments äußerst präzise erfasst werden. Eine anschließende Übertragung der Messwerte an die Steuereinheit 112, vorzugsweise in Echtzeit, erlaubt eine schnelle Änderung des Drehmoment der Antriebswelle 14 durch die Steuereinheit 112 bzw. den Antrieb 108. Die Informationsübertragung zwischen Drehmomenterfassungseinrichtung 26, Steuereinheit 112 und Antrieb 108 erfolgt in diesem Ausführungsbeispiel per Kabel (nicht dargestellt), kann aber prinzipiell auch kabellos erfolgen.

## Patentansprüche

1. Zykloidgetriebe (10) für einen Antrieb umfassend
- ein Gehäuse (12) mit einem ersten Lager (16), einem zweiten Lager (30) und einem Wälzring (22),
- eine um ihre Längsachse drehbar in dem ersten Lager gelagerte Antriebswelle (14),
- einen fest mit der Antriebswelle (14) verbundenen Exzenter (142),
- eine von dem Exzenter (142) angetriebene Kurvenscheibe (18) mit mehreren Löchern, wobei die Kurvenscheibe (18) dazu ausgebildet ist, sich in dem Wälzring (22) abzuwälzen,
- eine Bolzenscheibe (24) mit mehreren Bolzen (242), wobei die Bolzen (242) dazu ausgebildet sind, in die Löcher der Kurvenscheibe (18) zu greifen und von der Kurvenscheibe (18) angetrieben zu werden,
- eine fest mit der Bolzenscheibe (24) verbundene Abtriebswelle (28), wobei die Abtriebswelle (28) um ihre Längsachse drehbar in dem zweiten Lager (30) gelagert ist, und
- eine Drehmomenterfassungseinrichtung (26),
**dadurch gekennzeichnet, dass**
die Drehmomenterfassungseinrichtung (26) axial zwischen dem ersten Lager (16) und dem zweiten Lager (30) angeordnet ist und dazu ausgebildet ist, das Drehmoment der Abtriebswelle (28) zu erfassen,
wobei sich die Drehmomenterfassungseinrichtung (26) zwischen der Bolzenscheibe (24) und dem zweiten Lager (30) befindet, oder
wobei die Drehmomenterfassungseinrichtung (26) in die Bolzenscheibe (24) integriert ist.

2. Zykloidgetriebe (10) nach Anspruch 1, wobei das erste Lager (16), das zweite Lager (30) und der Wälzring (22) fest in dem Gehäuse (12) angeordnet sind.

3. Zykloidgetriebe (10) nach einem der Ansprüche 1 oder 2, wobei die Drehmomenterfassungseinrichtung (26) dazu ausgebildet ist, das Drehmoment der Abtriebswelle (28) in Drehrichtung um die Längsachse der Abtriebswelle (28) zu erfassen.

4. Zykloidgetriebe (10) nach einem der Ansprüche 1 bis 3, wobei die Drehmomenterfassungseinrichtung (26) fest mit der Bolzenscheibe (24) und/oder der Abtriebswelle (28) verbunden ist.

5. Zykloidgetriebe (10) nach einem der Ansprüche 1 bis 4, wobei die Drehmomenterfassungseinrichtung (26) einen oder mehrere Dehnungsmessstreifen (34) umfasst.

6. Zykloidgetriebe (10) nach einem der Ansprüche 1 bis 5, wobei die Drehmomenterfassungseinrichtung (26) einen Messflansch umfasst.

7. Zykloidgetriebe (10) nach Anspruch 6, wobei der Messflansch zwei konzentrische Ringe umfasst, wobei der innere Ring mit der Abtriebswelle (28) und der äußere Ring mit der Bolzenscheibe (24) verbunden ist oder der innere Ring mit der Bolzenscheibe (24) und der äußere Ring mit der Abtriebswelle (28) verbunden ist, insbesondere wobei der innere Ring und der äußere Ring über Speichen (266) verbunden sind, wobei auf den Speichen (266) Dehnungsmessstreifen (34) angebracht sind.

8. Zykloidgetriebe (10) nach einem der Ansprüche 1 bis 7, wobei die Drehmomenterfassungseinrichtung (26) dazu ausgebildet ist, eine Übertragung des erfassten Drehmoments an eine Steuereinheit des Antriebs durchzuführen.

9. Zykloidgetriebe (10) nach Anspruch 8, ferner mit einem Übertrager (36), wobei die Übertragung des erfassten Drehmoments an die Steuereinheit über den Übertrager (36) erfolgt, insbesondere wobei der Übertrager (36) eines von Schleifringübertrager, induktiver Übertrager, kapazitiver Übertrager, Funkübertrager oder optischer Übertrager ist.

10. Zykloidgetriebe (10) nach einem der vorherigen Ansprüche, wobei die Antriebswelle (14), die Abtriebswelle (28) und/oder die Drehmomenterfassungseinrichtung (26) als Hohlwelle ausgebildet ist.

11. Roboter (100) umfassend
- ein antriebsseitiges Roboterglied (104) und ein abtriebsseitiges Roboterglied (106),
- eine Gelenkeinheit (102), die das antriebsseitige Roboterglied (104) und das abtriebsseitige Roboterglied (106) gelenkig miteinander verbindet, und
- ein Zykloidgetriebe (10) nach Anspruch 1,
wobei das Zykloidgetriebe (10) in der Gelenkeinheit (102) angeordnet ist und dazu ausgebildet ist, das abtriebsseitige Roboterglied (106) über die Abtriebswelle (28) anzutreiben.

12. Roboter (100) nach Anspruch 11, ferner mit einer Steuereinheit (112), wobei die Drehmomenterfassungseinrichtung (26) des Zykloidgetriebes (10) dazu ausgebildet ist, das erfasste Drehmoment an die Steuereinheit (112) zu übertragen und wobei die Steuereinheit dazu ausgebildet ist, den Roboter (100) in Abhängigkeit von dem Drehmoment zu steuern.

13. Verfahren zur Steuerung eines Roboters mit einem Zykloidgetriebe nach Anspruch 1 mit den Schritten:
- Erfassen eines Drehmoments mit der Drehmomenterfassungseinrichtung (26) des Zykloidgetriebes (10),
- Übertragen des erfassten Drehmoments an eine Steuereinheit (112) des Roboters (100), und
- Steuern des Roboters (100) in Abhängigkeit von dem Drehmoment.

## Claims

1. A cycloidal transmission (10) for a drive, comprising:
- a housing (12) with a first bearing (16), a second bearing (30) and a rolling ring (22),
- a drive shaft (14) rotatable mounted about its longitudinal axis in the first bearing,
- an eccentric (142) fixedly connected to the drive shaft (14),
- a cam plate (18) driven by the eccentric (142) and having a plurality of holes, wherein the cam plate (18) is configured to roll in the rolling ring (22),
- a pin plate (24) having a plurality of pins (242), wherein the pins (242) are configured to engage the holes of the cam plate (18), so that the pin plate (24) is driven by the cam plate (18),
- an output shaft (28) fixedly connected to the pin plate (24), the output shaft (28) being mounted in the second bearing (30) so as to be rotatable mounted about its longitudinal axis, and
- a torque detection means (26),
**characterized in that**
the torque detection means (26) is disposed axially between the first bearing (16) and the second bearing (30) and is configured to detect the torque of the output shaft (28), wherein the torque detection means (26) is located between the pin plate (24) and the second bearing (30), or wherein the torque detection means (26) is integrated into the pin plate (24).

2. The cycloidal transmission (10) according to claim 1, wherein the first bearing (16), the second bearing (30) and the rolling ring (22) are fixedly arranged in the housing (12).

3. The cycloidal transmission (10) according to claim 1 or 2, wherein the torque detection means (26) is configured to detect the torque of the output shaft (28) in the direction of rotation relative to the longitudinal axis of the output shaft (28).

4. The cycloidal transmission (10) according to any one of claims 1 to 3, wherein the torque detection means (26) is fixedly connected to the pin plate (24) and/or the output shaft (28).

5. The cycloidal transmission (10) according to any one of claims 1 to 4, wherein the torque detection means (26) comprises one or more strain gauges (34).

6. The cycloidal transmission (10) according to any one of claims 1 to 5, wherein the torque detection means (26) comprises a measuring flange.

7. The cycloidal transmission (10) according to claim 6, wherein the measuring flange comprises two concentric rings, wherein the inner ring is connected to the output shaft (28) and the outer ring is connected to the pin plate (24), or wherein the inner ring is connected to the pin plate (24) and the outer ring is connected to the output shaft (28), in particular wherein the inner ring and the outer ring are connected by spokes (266), wherein strain gauges (34) are mounted on the spokes (266).

8. The cycloidal transmission (10) according to any one of claims 1 to 11, wherein the torque detection means (26) is configured to transmit the detected torque to a control unit of the drive.

9. The cycloidal transmission (10) according to claim 8, further comprising a transmitter (36), wherein the transmission of the detected torque to the control unit is performed via the transmitter (36), in particular wherein the transmitter (36) is at least one of a slip ring transmitter, an inductive transmitter, a capacitive transmitter, a radio transmitter and an optical transmitter.

10. The cycloidal transmission (10) according to any one of the previous claims, wherein at least one of the drive shaft (14), the output shaft (28) and the torque detection means (26) is configured as a hollow shaft.

11. A robot (100), comprising:
- a drive-side robot link (104) and an output-side robot link (106),
- a joint unit (102) which joints the drive-side robot link (104) and the output-side robot link (106), and
- a cycloidal transmission (10) according to claim 1,
wherein the cycloidal transmission (10) is arranged in the joint unit (102) and is configured to drive the output-side robot link (106) via the output shaft (28).

12. The robot (100) according to claim 11, further comprising a control unit (112), wherein the torque detection means (26) of the cycloidal transmission (10) is configured to transmit the detected torque to the control unit (112) and wherein the control unit is configured to control the robot (100) based on the detected torque.

13. A method of controlling a robot having a cycloidal transmission according to claim 1, comprising:
- measuring a torque with the torque measuring means (26) of the cycloidal transmission (10),
- transmitting the detected torque to a control unit (112) of the robot (100), and
- controlling the robot (100) based on the detected torque.

## Revendications

1. Transmission cycloïdale (10) pour un entraînement, comprenant
- un boîtier (12) doté d'un premier palier (16), d'un deuxième palier (30) et d'une bague de roulement (22),
- un arbre d'entraînement (14) monté rotatif autour de son axe longitudinal dans le premier palier,
- un excentrique (142) relié fixement à l'arbre d'entraînement (14),
- un disque à came (18) entraîné par l'excentrique (142) et doté de plusieurs trous, le disque à came (18) étant réalisé pour rouler dans la bague de roulement (22),
- un disque à boulons (24) doté de plusieurs boulons (242), les boulons (242) étant réalisés pour venir en prise dans les trous du disque à came (18) et pour être entraînés par le disque à came (18),
- un arbre de sortie (28) relié fixement au disque à boulons (24), l'arbre de sortie (28) étant monté rotatif autour de son axe longitudinal dans le deuxième palier (30), et
- un dispositif de détection de couple (26),
**caractérisée en ce que** le dispositif de détection de couple (26) est disposé axialement entre le premier palier (16) et le deuxième palier (30) et est réalisé pour détecter le couple de l'arbre de sortie (28),
le dispositif de détection de couple (26) se trouvant entre le disque à boulons (24) et le deuxième palier (30), ou
le dispositif de détection de couple (26) étant intégré dans le disque à boulons (24).

2. Transmission cycloïdale (10) selon la revendication 1, le premier palier (16), le deuxième palier (30) et la bague de roulement (22) étant disposés fixement dans le boîtier (12).

3. Transmission cycloïdale (10) selon l'une des revendications 1 ou 2, le dispositif de détection de couple (26) étant réalisé pour détecter le couple de l'arbre de sortie (28) dans le sens de rotation autour de l'axe longitudinal de l'arbre de sortie (28).

4. Transmission cycloïdale (10) selon l'une des revendications 1 à 3, le dispositif de détection de couple (26) étant relié fixement au disque à boulons (24) et/ou à l'arbre de sortie (28).

5. Transmission cycloïdale (10) selon l'une des revendications 1 à 4, le dispositif de détection de couple (26) comprenant une ou plusieurs jauges extensométriques (34).

6. Transmission cycloïdale (10) selon l'une des revendications 1 à 5, le dispositif de détection de couple (26) comprenant une bride de mesure.

7. Transmission cycloïdale (10) selon la revendication 6, la bride de mesure comprenant deux bagues concentriques, la bague intérieure étant reliée à l'arbre de sortie (28) et la bague extérieure étant reliée au disque à boulons (24) ou la bague intérieure étant reliée au disque à boulons (24) et la bague extérieure étant reliée à l'arbre de sortie (28), en particulier la bague intérieure et la bague extérieure étant reliées par le biais de rayons (266), des jauges extensométriques (34) étant montées sur les rayons (266).

8. Transmission cycloïdale (10) selon l'une des revendications 1 à 7, le dispositif de détection de couple (26) étant réalisé pour effectuer une transmission du couple détecté à une unité de commande de l'entraînement.

9. Transmission cycloïdale (10) selon la revendication 8, comportant en outre un émetteur (36), la transmission du couple détecté à l'unité de commande s'effectuant par le biais de l'émetteur (36), en particulier l'émetteur (36) étant l'un parmi un émetteur à bague collectrice, un émetteur inductif, un émetteur capacitif, un émetteur radio ou un émetteur optique.

10. Transmission cycloïdale (10) selon l'une des revendications précédentes, l'arbre d'entraînement (14), l'arbre de sortie (28) et/ou le dispositif de détection de couple (26) étant réalisé(s) sous forme d'arbre creux.

11. Robot (100) comprenant
- un organe de robot (104) côté entraînement et un organe de robot (106) côté sortie,
- une unité d'articulation (102) qui relie l'organe de robot (104) côté entraînement et l'organe de robot (106) côté sortie l'un à l'autre de manière articulée, et
- une transmission cycloïdale (10) selon la revendication 1,
la transmission cycloïdale (10) étant disposée dans l'unité d'articulation (102) et étant réalisée pour entraîner l'organe de robot (106) côté sortie par le biais de l'arbre de sortie (28).

12. Robot (100) selon la revendication 11, comportant en outre une unité de commande (112), le dispositif de détection de couple (26) de la transmission cycloïdale (10) étant réalisé pour transmettre le couple détecté à l'unité de commande (112) et l'unité de commande étant réalisée pour commander le robot (100) en fonction du couple.

13. Procédé de commande d'un robot comportant une transmission cycloïdale selon la revendication 1, présentant les étapes suivantes :
- détection d'un couple à l'aide du dispositif de détection de couple (26) de la transmission cycloïdale (10),
- transmission du couple détecté à une unité de commande (112) du robot (100), et
- commande du robot (100) en fonction du couple.
